# EUROPEAN PATENT APPLICATION

(11) **EP 2 199 602 A1**
(43) Date of publication of application: **23.06.2010**
(21) Application number: 08022012.2
(22) Date of filing: 18.12.2008
(51) Int. Cl.: F03B 13/26, F03B 17/06

(54) **A method of securing a hydroelectric turbine at a deployment site and hydroelectric turbine**

(71) Applicant: OpenHydro IP Limited, Dublin 2 (IE)
(72) Inventor: Ives, James, Dublin 2 (IE); Dunne, Paul, Dublin 9 (IE)
(74) Representative: O'Neill, Brian

(57) **Abstract**

The present invention provides a method of securing a hydroelectric turbine at a deployment site, for example on the seabed and in an area of significant tidal flow, which method enables the turbine to be located securely without risk of overturning or sliding out of position, but without requiring the use of piling or other complex fixing operations, by using the tidal flow to generate a downwardly acting force on one or more legs of a base on which the turbine is mounted.

## Description

### Field of the invention

This invention relates to a method of securing a hydroelectric turbine at a deployment site, for example on the seabed and in an area of significant tidal flow, which method enables the turbine to be located securely without risk of overturning or sliding out of position, but without requiring the use of piling or other complex fixing operations, thus significantly simplifying the installation of such a turbine.

### Background of the invention

Currently, and at a global scale, there is great concern surrounding the damage that the emission of CO₂ is causing to our environment, in particular the threat posed by global warming. One of the major sources of CO₂ emission is in the production of electricity, on a large scale, through the burning of fossil fuels. Electricity is however a commodity that has become essential to the survival of the human race, and there are thus vast resources currently being expended in seeking alternative means of generating large quantities of electricity without the use of fossil fuel. While nuclear energy is one such alternative, most societies are uncomfortable with the negative aspects of nuclear power and thus other more desirable solutions are required.

Renewable energy has thus come to the fore in recent years, with many projects being developed around solar energy, wind energy, and tidal power. Of these alternative forms of energy, tidal power is arguably the most attractive, given that tidal flows are entirely predictable and constant, unlike wind or solar energy which are relatively intermittent and therefore less dependable.

However, harnessing tidal energy does provide its own challenges, in particular with respect to the installation and maintenance of tidal power generators, for example hydroelectric turbines, which by the very nature of the operation of same must be located in relatively fast flowing tidal currents, and more than likely located on the seabed, These conditions are significantly inhospitable, and are not conducive to safe working conditions. The installation of a base on which such tidal turbines are mounted has conventionally taken the form of the sinking of a pile into the seabed, on which pile a turbine or secondary frame carrying one or more turbines can then be located. However, the sinking of a pile into the seabed in an area of high tidal flow is considerably problematic and generally a dangerous operation. In addition, significant drilling and piling equipment must be transported to and operated at the site of installation, significantly increasing the complexity and cost of the operation.

The installation process is further complicated by an increasing shortage in the market of suitable vessels and equipment to perform such drilling work and the extreme danger of engaging divers in high tidal flow sites.

It is therefore an object of the present invention to provide a method of securing a hydroelectric turbine at a deployment site such as on the seabed and using readily available non-specialist marine equipment and without requiring complex and time consuming drilling or similar preparatory operations.

### Summary of the invention

According to a first aspect of the present invention there is provided a method of securing a hydroelectric turbine at a deployment site, the method comprising the steps of:
mounting the turbine on a base having a plurality of legs;
positioning the base on the seabed in an area of high tidal flow;
utilising the force exerted on the turbine and/or the base by the tidal flow to generate a turning moment on the base which forces at least one of the legs against the seabed such as to prevent unwanted movement of the base.

Preferably, the method comprises the steps of:
positioning the turbine at least partially above the base such to experience an overturning moment as a result of the tidal flow against the turbine;
and allowing the overturning moment to be transferred through the base to at least one of the legs such as to force said leg against the seabed

Preferably, the method comprises the step of:
piercing the seabed with at least one of the legs.

Preferably, the method comprises the step of:
utilising torque generated by the turbine during the operation thereof to force at least one of the legs against the seabed.

Preferably, the method comprises the step of:
positioning the base with respect to the direction of tidal flow such that when the tide flows in a first direction at least one leg on a downstream side of the turbine is forced against the seabed, and when the tide reverses to flow in a second direction substantially opposite to the first direction, at least one other leg on a downstream side of the turbine is forced against the seabed.

Preferably, the method comprises the steps of:
providing the base with three legs arranged in a substantially triangular array;
positioning the base with respect to the direction of tidal flow such that two of the legs are positioned on a downstream side of the turbine and the remaining leg is positioned on an upstream side of the turbine, and vice versa when the direction of tidal flow reverses.

Preferably, the method comprises the step of:
positioning the base with respect to the direction of tidal flow such that the two legs on the downstream side of the turbine are located along an axis running substantially normally to the direction of tidal flow.

According to a second aspect of the present invention there is provided a hydroelectric turbine system comprising a turbine; a base on which the turbine is mountable, the base comprising a plurality of legs at least one of which is positioned to experience a down-force, when the system is deployed on the seabed at a high tidal flow deployment site, which down-force is generated from the force exerted on the turbine and/or the base by the tidal flow.

Preferably, the base comprises three legs arranged in a triangular orientation.

Preferably, each of the three legs has a seabed-contacting end which is shaped and dimensioned to assist in penetrating the seabed.

Preferably, the base comprises a frame which is triangular in shape, a leg extending from each apex of the frame.

Preferably, a seabed contacting end of the, or each, leg is pointed.

Preferably, a seabed contacting end of the, or each, leg comprises an array of fins.

Preferably, the plurality of fins are arranged in a circular array about a longitudinal axis of the respective leg.

Preferably, each fin tapers inwardly such that the fins converge at a common point.

As used herein, the term "seabed" is intended to mean the seabed in addition to the floor or bottom of any suitable body of water such as a riverbed or the like.

As used herein, the term "direction of tidal flow" is intended to mean the prevailing direction in which the tide flows, as there will be some deviation from the prevailing direction as the tide ebbs and flows.

### Brief Description of the Drawings

Figure 1 illustrates a perspective view of a hydroelectric turbine system according to an embodiment of the invention;
Figure 2 illustrates a schematic side elevation of the system of Figure 1, located *in situ* on the seabed; and
Figure 3 illustrates a perspective view from beneath of one of the legs forming part of the base illustrated in Figure 1.

### Detailed Description of the Drawings

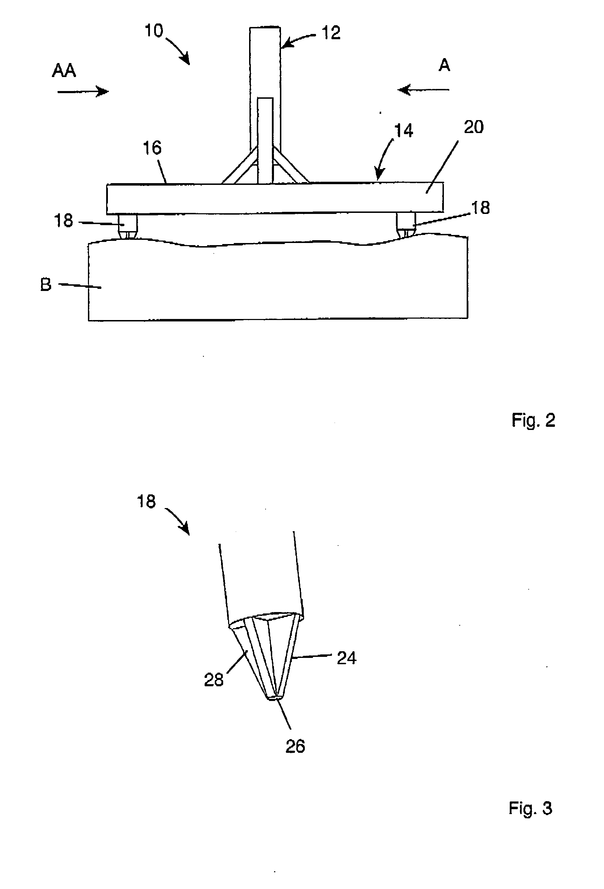

Referring now to the accompanying drawings, there is illustrated a hydroelectric turbine system, generally indicated as 10, which is adapted to simplify the installation and maintenance of a hydroelectric turbine 12 forming part of the system 10 on to the seabed B as illustrated in Figure 2. The system 10 further comprises a base 14 on which the turbine 12 is mounted, and which in the embodiment illustrated comprises a frame 16 from which projects three legs 18 which are adapted, as will be described hereinafter, to press against and preferably penetrate the seabed B under the influence of forces acting on the system 10 as a result of the tidal flow of water there past. Once the legs 18 are pressing against or have penetrated the seabed B the system 10 will be suitably secured in position, and thus will not, in response to tidal flow there past, slide along the seabed B or be overturned. Thus it will be appreciated, in particular from the following description of the configuration and operation of the system 10, that no drilling or other preparatory operations are required prior to positioning the system 10 on the seabed B. This greatly reduces the time, effort and cost of installing and removing the system 10.

The frame 16 of the base 14, in the embodiment illustrated, is triangular in shape and is comprised of three struts 20 which together define three apexes 22, at or adjacent each of which one of the legs 18 extends downwardly. While the triangular shape of the frame 16 is preferred, it will be appreciated from the following description that the shape of the frame 16 may be considerably varied, and further the number of legs 18 provided may be varied.

Referring now in particular to Figure 2 it can be seen that each leg 18 includes a seabed contacting end 24, which preferably tapers inwardly to a point 26. The use of the term "point" here is not intended to limit the configuration to a sharpened tip or the like, and is simply intended to mean that the point 26 is sufficiently dimensioned to allow the contacting end 24 of each leg 18 to grip and preferably at least partially penetrate the seabed B as described in detail hereinafter.

In the embodiment illustrated each contacting end 24 comprises a plurality of tapered fins 28, four fins 28 being provided to form each contacting end 24. It will of course be appreciated that the fins 28 could be significantly varied both in number and shape/orientation. The use of the fins 28 significantly reduces the cross-sectional area of the contacting end 24, thereby increasing the ability of the end 24 to grip, pierce or penetrate the seabed B. In addition, once the contacting ends 24 are sunk into the seabed B, the fins 28 will resist any turning moment on each leg 18, thereby improving the stability of the system 10.

Turning then to the operation of the invention, the system 10 is initially transported to a deployment site using any suitable vessel (not shown), for example a barge towed by a tug or the like. The system 10 is then lowered from said vessel (not shown) towards and onto the seabed B, with the turbine 12 secured to the base 14. On contacting the seabed B the pointed contacting ends 24 of the three legs 18 will, due to the weight of the turbine 12 and base 14 acting downwardly thereon, provide significant grip on the seabed B. In the absence of the significant tidal forces experienced at the deployment site, this grip would be sufficient to prevent unwanted movement or slippage of the system 10 along the seabed B. However, due to the significant tidal forces which are experienced at the deployment site the level of grip effected by the weight of the turbine 12 and base 14 may not be sufficient to prevent the above-mentioned unwanted movement of the system 10.

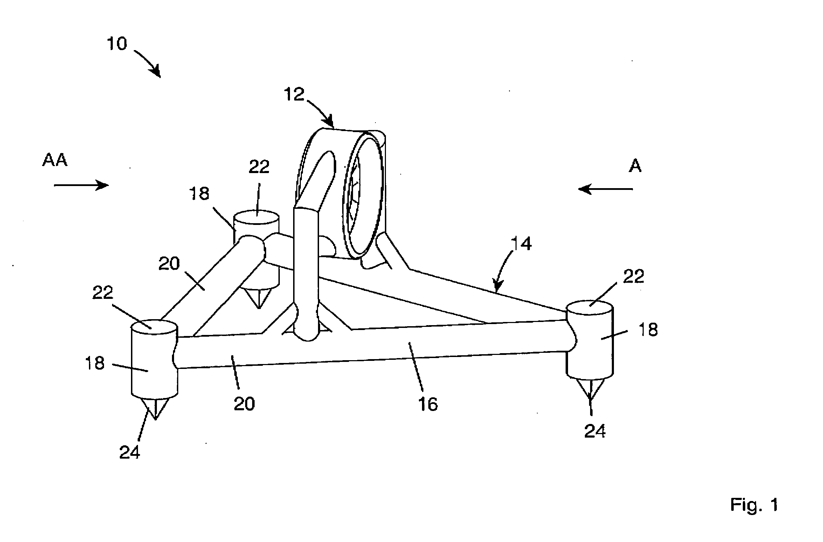

The system 10 is therefore designed to generate, from the tidal flow, a downwardly acting force through at least one of the legs 18 in order to generate increased grip by the base 14 on the seabed B. This is achieved primarily by selective positioning of the turbine 12 on the base 14 at a location between each of the legs 18. In this way, regardless of the direction of tidal flow, one or more of the legs 18 will be located downstream of the turbine 12. Referring to figure 1, with the tide flowing in a first direction A the turbine 12 is located upstream of two of the legs 18 and downstream of the remaining leg 18. The tidal flow of water against the turbine 12 will generate a turning moment on the base 14. The base 14 thus acts like a lever pivoting about the point at which the turbine 12 is mounted, and as a result of the outboard location of the pair of downstream legs 18, will force those two legs 18, and in particular the contacting end 24 of the legs 18, downwardly against the seabed B. The force generated is preferably sufficient to result in penetration of the two downstream legs 18 into the seabed B in order to securely locate the system 10 in place and prevent the slippage thereof along the seabed B. The amount of force generated at the contacting end 24 of each leg can be varied by increasing or decreasing the distance at which the legs 18 are spaced from the turbine 12, in order to increase the length of the effective lever defined by the frame 16. The height at which the turbine 12 extends above the base 14 is also a determining factor in the magnitude of the turning moment which is generated. Thus the height of the turbine 12, relative to the base 14, can be varied to vary the force generated, and therefore the level of penetration of the legs 18 in order to prevent unwanted movement of the system 10.

The system 10 is also preferably positioned, with respect to the prevailing direction of tidal flow, such that the pair of downstream legs 18 are each positioned on a line which runs substantially normally to the direction of tidal flow A. In this way an equal force is applied to each of the legs 18, improving the stability of the base 14 on the seabed B When the tide reverses to flow in the opposite direction AA the two legs 18 which were downstream of the turbine 12 will now be located upstream of the turbine 12, while the remaining single leg 18 will now be located downstream of the turbine 12. Again the tidal flow acting against the turbine 12 will generate a turning moment, which results in the frame 16 behaving like a lever, and transmitting this turning moment into a downforce acting through the single downstream leg 18. Again this downforce will result in significant gripping and/or penetration of the contacting end 24 of said leg 18 into the seabed B in order to prevent unwanted movement of the system 10.

In addition to the above generated forces, the turbine 12 is operating in the tidal flow and undergoing rotation to generate electricity. As a result a torque will be generated by the turbine 12. Again the positioning of the legs 18 with respect to the turbine 12 will result in this torque being transmitted downwardly through the base 14 into the legs 18 in order to further increase the downwardly acting force experienced by the legs 18. Thus the operation of the turbine 12 further acts to secure the system 10 in position against unwanted movement along the seabed B.

As mentioned above, the shape of the frame 16, in addition to the number of legs 18, may be varied once the above-described functionality is maintained. However, the use of three legs 18 ensures that regardless of irregularities in the contour of the seabed B, all three legs 18 will contact the seabed B in order to provide stability to the system 10. In addition, the use of three legs 18 is the minimum number of legs which will allow the system 10 to be stably positioned on the seabed B. This thus maximises the pressure which is exerted by each leg 18 on the seabed B in order to effect penetration of the seabed B. While additional legs 18 could be provided, this would decrease the pressure exerted by each leg 18. It will therefore be appreciated that the use of three legs 18 in a triangular configuration provides a number of benefits to the system 10.

As detailed above, the system 10 are transported to the installation site and lowered into the sea by suitable means. The system 10 is lowered towards and onto the seabed B, as illustrated in Figure 2. At this point as a result of the triangular arrangement of the legs 18, each contacting end 24 will automatically contact the seabed B, such that the system 10 automatically finds the most stable position. Once the system 10 is allowed to sit on the seabed B in the tidal flow, each of the contacting ends 24, due to the above described lever effect, along with the shape and configuration of the ends 24, will penetrate the seabed B, regardless of whether the seabed B is rock. This penetration can be clearly seen from Figure 2. The system 10 will eventually settle after a certain level of penetration of each of the legs 18. At this point the system 10 is fully secured in position, and regardless of the tidal current acting thereon, will not slide along the seabed B, and in addition will not become unsettled or overturn.

When lowering the system 10 it may be beneficial to let the "front" leg 18 down first. This will allow the system 10 to be rotated about this leg 18 (by manoeuvring the vessel used when lowering the system 10 to the seabed B) until the system 10 has been brought into the correct orientation so that the turbine 12 is in line with the tidal flow. At this point the back two legs 18 are lowered. This approach may mean that the front leg 18 may not have the fins 28, as the fins 28 would make it more difficult to rotate the front leg 18.

As no drilling or other preparatory operations are required as a result of the configuration and operation of the system 10, the design thereof allows the turbine 12 to be pre-installed on the base 14 prior to deployment of the system 10 onto the seabed B. If drilling or other operations such as pile driving were required in order to secure the system 10 in position, then any turbine 12 mounted thereto during such operations would be at significant risk of damage, and would thus not be a viable option. Thus it will be appreciated that the system 10 of the present invention provides a significant number of advantages over prior art methods of installation of tidal turbines on the seabed.

The system 10 is also capable, as a result of the design of the legs 18, and in particular the tapered contacting ends 24, to be lifted off the seabed B by suitable hoisting means (not shown) in the event that the turbine 12 or base 14 require maintenance. Once such maintenance has been performed, the system 10 is simply lowered back onto the seabed B, where the base 14 will again automatically penetrate the seabed B to secure itself in position. It is therefore not necessary to exactly reposition the system 10 at the location from which it was removed for maintenance. This significantly reduces the accuracy required when repositioning the system 10, thereby reducing the time taken to complete this task.

## Claims

1. A method of securing a hydroelectric turbine at a deployment site, the method comprising the steps of:
mounting the turbine on a base having a plurality of legs;
positioning the base on the seabed in an area of high tidal flow;
utilising the force exerted on the turbine and/or the base by the tidal flow to generate a turning moment on the base which forces at least one of the legs against the seabed such as to prevent unwanted movement of the base.

2. A method according to claim 1 comprising the steps of:
positioning the turbine at least partially above the base such to experience an overturning moment as a result of the tidal flow against the turbine;
and allowing the overturning moment to be transferred through the base to at least one of the legs such as to force said leg against the seabed.

3. A method according to claim 1 or 2 comprising the step of:
piercing the seabed with at least one of the legs.

4. A method according to any preceding claim comprising the step of:
utilising torque generated by the turbine during the operation thereof to force at least one of the legs against the seabed.

5. A method according to any preceding claim comprising the step of:
positioning the base with respect to the direction of tidal flow such that when the tide flows in a first direction at least one leg on a downstream side of the turbine is forced against the seabed, and when the tide reverses to flow in a second direction substantially opposite to the first direction, at least one other leg on a downstream side of the turbine is forced against the seabed.

6. A method according to any preceding claim comprising the steps of:
providing the base with three legs arranged in a substantially triangular array;
positioning the base with respect to the direction of tidal flow such that two of the legs are positioned on a downstream side of the turbine and the remaining leg is positioned on an upstream side of the turbine, and vice versa when the direction of tidal flow reverses.

7. A method according to claim 6 comprising the step of:
positioning the base with respect to the direction of tidal flow such that the two legs on the downstream side of the turbine are located along an axis running substantially normally to the direction of tidal flow.

8. A hydroelectric turbine system comprising a turbine; a base on which the turbine is mountable, the base comprising a plurality of legs at least one of which is positioned to experience a down-force, when the system is deployed on the seabed at a high tidal flow deployment site, which down-force is generated from the force exerted on the turbine and/or the base by the tidal flow.

9. A system according to claim 8 in which the base comprises three legs arranged in a triangular orientation.

10. A system according to claim 9 in which each of the three legs has a seabed-contacting end which is shaped and dimensioned to assist in penetrating the seabed.

11. A system according to any of claims 8 to 10 in which the base comprises a frame which is triangular in shape, a leg extending from each apex of the frame.

12. A system according to any of claims 8 to 11 in which a seabed contacting end of the, or each, leg is pointed.

13. A system according to any of claims 8 to 12 in which a seabed contacting end of the, or each, leg comprises an array of fins.

14. A system according to claim 13 in which the plurality of fins are arranged in a circular array about a longitudinal axis of the respective leg.

15. A system according to claim 13 or 14 in which each fin tapers inwardly such that the fins converge at a common point.
